Europäisches Patentamt

European Patent Office

Office européen des brevets

(11) Publication number: **0 104 944**
**B1**

(12) **EUROPEAN PATENT SPECIFICATION**

(45) Date of publication of patent specification: **04.05.88**

(21) Application number: **83305798.7**

(22) Date of filing: **28.09.83**

(51) Int. Cl.⁴: **F 16 K 31/363,** F 16 K 39/02, F 16 K 17/02

(54) High pressure regulator valve.

(30) Priority: **28.09.82 US 425521**

(43) Date of publication of application:
**04.04.84 Bulletin 84/14**

(45) Publication of the grant of the patent:
**04.05.88 Bulletin 88/18**

(84) Designated Contracting States:
**BE CH DE FR GB LI NL SE**

(56) References cited:
**AT-B- 265 787**
**CH-A- 381 037**
**DE-A-2 625 555**
**US-A-2 619 112**
**US-A-3 298 389**

(73) Proprietor: **Butterworth Jetting Systems, Inc.**
**3721 Lapas Drive**
**Houston, Texas 77023 (US)**

(72) Inventor: **Pacht, Amos**
**11746 Bobwhite Drive**
**Houston Texas 77034 (US)**

(74) Representative: **Orchard, Oliver John**
**JOHN ORCHARD & CO. Staple Inn Buildings**
**North High Holborn**
**London WC1V 7PZ (GB)**

Courier Press, Leamington Spa, England.

EP 0 104 944 B1

# Description

The present invention relates to a pressure regulator valve intended to minimize the variation between the valve opening pressure and the continuous operating pressure. The valve is particularly adapted for use in conjunction with high pressure liquid jet blasting or cutting apparatus.

In the development of high pressure hydraulic apparatus, such as water jet cutting and blast cleaning apparatus and hydrostatic test equipment, operating pressures have now commonly reached values in the range of 703 to 3515 kg/cm² (10,000 to 50,000 psig). The development of working liquid handling equipment operating in these pressure ranges presents special problems. In certain applications of water jet blast cleaning or cutting equipment, for example, it is desirable to regulate the pump discharge pressure to a substantially constant value regardless of the rate of usage of the pump flow. For example, it may be desired to have several on-off type nozzles or jetting guns connected to a single or common pump discharge line. In such an application it is desirable to provide a pressure regulating valve which will regulate the pump discharge pressure to a substantially constant value so that one or more guns may be properly operated from the same fluid source.

The high operating pressures of liquid jet blast cleaning or cutting equipment requires that the operating components be mechanically strong enough to withstand the operating pressures but also be mechanically simple and adapted for easy replacement of those component parts which are subject to high rates of wear due to the pressure and flow characteristics of the liquid at such operating conditions. Because of the high operating pressures a component such as a pressure regulating valve is particularly difficult to design because of the extremely high actuating forces that must be applied to bias the valve closure member in the closed or controlled position. At the same time the valve must be adapted to operate satisfactorily over a long period of time, be mechanically simple and cost effective and also be particularly adapted for replacement of component parts. These requisites have presented several problems to the art worker.

Prior to the development of the present invention, for example, it has been common to utilize water jet cutting equipment wherein a simple on-off or so-called dump valve is used in conjunction with the jet cleaning guns as in means of flow control. However, the development of a pressure regulating valve as described and claimed herein has been particularly beneficial for such applications and those skilled in the art will recognize that many other applications for the improved valve of the present invention will be appropriate and desirable.

In an embodiment of the invention to be described, there is provided a valve adapted for regulating relatively high hydraulic fluid pressures in a conduit, said pressures being in the range of at least 703 to 3515 kg/cm² 10,000 to 20,000 psig, said valve including a body defining a flow chamber, an inlet passage in communication with said chamber and adapted to be connected to said conduit, means forming a seat member including an outlet passage opening into said chamber and having a portion forming a seat surface, a valve closure member disposed in said chamber, said valve closure member comprising a portion engageable with said seat surface and a control piston connected to said closure member portion and including a portion slidably disposed in a bore in said body, said valve closure member including a first effective cross-sectional area exposed to fluid pressure in said chamber and responsive to said fluid pressage to urge said closure member to move away from said seat surface which is configured such that a second effective cross-section area of said closure member exposed to fluid pressure in said chamber upon movement of said closure member to the valve open position is no more than approximately ten percent greater than said first area, and biasing means for urging said control piston toward said closed position of said closure member.

In CH—A—381 037 (GB—A—926 180) there is described a pressure relief valve having a closure member with a conical surface which engages a seating shoulder under the influence of a spring.

In US—A—2 619 112 there is described a pressure relief valve having a pair of aligned pistons and cylinders, one of which operates before the other in order to increase the sensitivity of the valve.

The present invention provides an improved fluid pressure regulating valve particularly adapted for use in conjunction with high pressure liquid applications such as water jet cutting and blast cleaning equipment and hydrostatic testing equipment.

The invention can provide embodiments having a closure member, seat configuration, and operating or control piston adapted to minimise the variation between the pressure required to open or unseat the closure member and the regulated or steady state operating pressure of the valve. It is also possible to provide an improved pressure regulating valve having a plug type closure member formed with a frusto-conical seating surface engageable with a cooperating seat surface on a seat member wherein the differential areas acted on by the fluid pressure upon opening of the valve are minimised, the valve seat surface area is maximised to reduce erosion due to high velocity flow and there is no tendency for the closure member to jam in the closed position against the seat.

Embodiments of the invention can be arranged such as to provide a high pressure regulating valve having a control piston for biasing the closure member in the open position which is of sufficiently large effective area subject to pressure fluid upstream of the valve seat that a minimum pressure differential is experienced between the pressure required to open the valve and the steady state regulated or operating pressure of the valve.

The present invention can also be put into effect in such manner as to provide an improved high pressure regulating valve having a pressure fluid actuator for biasing the valve in the closed position which is of uncomplicated construction,· is designed to minimise leakage of the control pressure fluid and includes a pressure fluid chamber volume for an actuating piston which is subject to minimal change over the operating range of the valve so that the change in pressure of the control fluid has minimal effect on the valve operating characteristics. In fact, the valve is adapted to provide a miximum change in volume of the control pressure fluid over the stroke length of the valve closure member which is operable to increase the control fluid pressure sufficiently to counteract the valve opening forces resulting from the change in effective area of the valve closure member when moving from the seated to the unseated position.

In one possible arrangement there is provided a valve biasing means for a high pressure regulating valve which is adapted to limit the opening movement of the valve closure member, control piston and actuating piston.

The high pressure regulator valve may adopt an improved arrangement of the component parts wherein a valve seat member and closure member are easily removable from the valve body for replacement or repair. In particular, in this case, the valve closure member and control piston which are formed as an integral part may be removed from the valve body and replaced without requiring disassembly or bleeding of control pressure fluid from the biasing means. The valve body and biasing means housing are of mechanically uncomplicated and rugged construction and the valve biasing pressure chamber is easily sealed by an improved cup shaped flexible diaphragm interposed between the actuating piston and the pressure chamber.

The invention will be better understood from the following description which refers, by way of example, to the accompanying drawings, in which:-

Figure 1 is a schematic diagram of a hydraulic apparatus comprising a high pressure water jet cutting or blast cleaning unit including one form of pressure regulating valve in accordance with the present invention;

Figure 2 is a longitudinal central section view of the pressure regulating valve; and

Figure 3 is a large scale detail view of the valve closure member and valve seat.

In the description which follows like parts are marked, throughout the specification and drawings with the same reference numerals, respectively. The drawings are not necessarily to scale and in certain views schematic representations of some components are presented in the interest of clarity and conciseness.

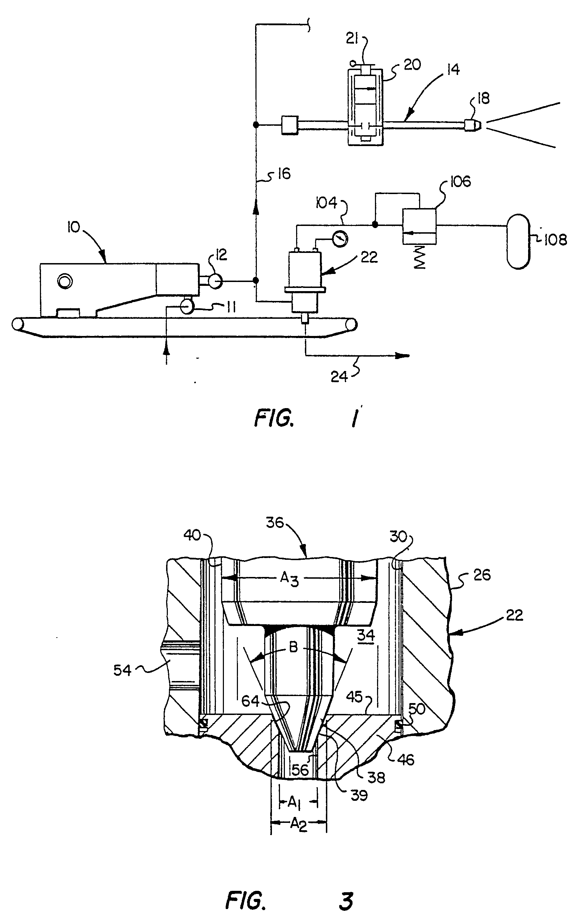

Referring to Figure 1, there is illustrated in somewhat schematic form a hydraulic apparatus comprising a high pressure pump, generally designated by the numeral 10, which is adapted to be driven by a prime mover, not shown, for pumping liquid such as water from a source, also not shown, connected to an inlet manifold 11, and for the delivery of said liquid at pressures in the range of a least 703 to 3515 kg/cm³ (10,000 to 20,000 psig) at a pump discharge manifold 12. The pump 10 is adapted to be used in conjunction with a high pressure water jet cutting or blast cleaning gun, generally designated by the numeral 14 and which is connected to the pump discharge manifold 12 by way of a flow conduit 16. The jet gun 14 includes a discharge nozzle 18 and an operator actuated shutoff valve 20.

The gun 14 is operable to be actuated to supply a very high velocity stream of water to be used for cutting or blast cleaning in many applications known to those skilled in the art. In particular, the valve 20 is adapted to shutoff upon release of its actuating lever 21 to abruptly interrupt flow of high pressure water through the conduit 16. The apparatus illustrated in Figure 1 is adapted to be used in conjunction wth one or several guns 14 although only one is shown for illustration purposes. Additional jet guns 14 could be used with the apparatus described and illustrated by merely connecting each additional gun to the conduit 16 in a manner readily understandable by those skilled in the art.

The apparatus illustrated in Figure 1 is adapted to be used in conjunction with an improved high pressure regulating valve, constituting a preferred embodiment of the present invention, and generally designated by the numeral 22.

The valve 22 is also adapted to be connected to the pump discharge conduit 16 and is adapted to regulate the pressure in the conduit 16 by venting or dumping water throgh a valve discharge line 24 when the flow through the valve 20 is being throttled or completely shutoff. Basically, the pressure regulator valve 22 is adapted to maintain a substantially constant discharge pressure in the conduit 16 so that pressure variations do not occur at the guns 14 when in use and, particularly, if more than one gun is being used at the same time. The regulation of pressure to minimize the variation in pressure between the valve opeing and operating condition is particularly advantageous in hydraulic jet blast cleaning or cutting systems as well as many other hydraulic systems including hydrostatic test equipment used for testing components such as piping, pressure vessels and other pressure fluid devices.

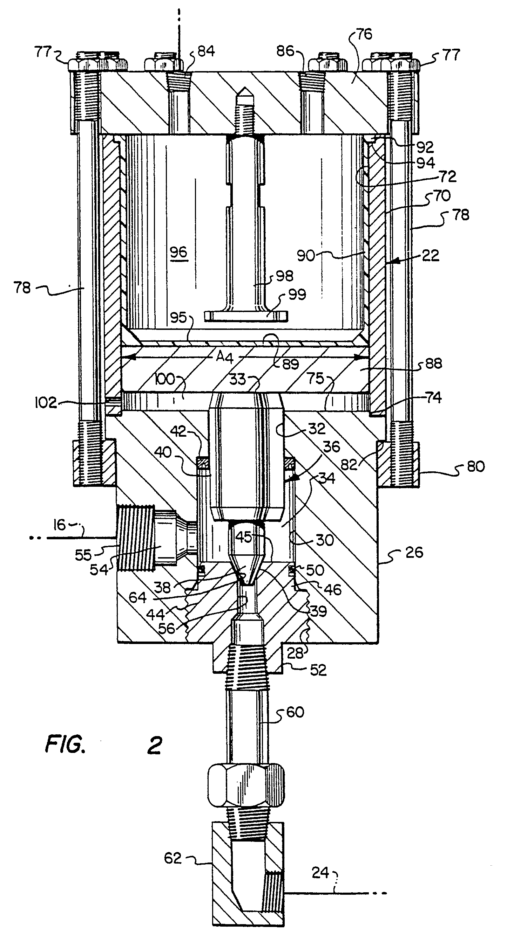

Referring now to Figure 2, the valve 22 is shown in a longitudinal central section view which illustrates all of the essential components of the valve. The valve 22 includes a generally cylindrical body member 26 having a longitudinal stepped bore formed therein having a threaded portion 28, a slightly smaller diameter portion 30 and a second coaxial and small diameter portion 32. The bore 30 defines, in part, a flow chamber 34 in which is disposed a plug type closure member 36 having a frusto-conical shaped head portion 38 and a control piston 33, of which a control or operating piston portion 40, which is slidably disposed in the bore 32 and is in sealing engagement with an annular seal member, generally designated by the numeral 42, is connected to, and preferably formed integral with, the head portion 38 of the valve closure member 36. The seal member 42 may be of a type commercially available and is adapted to seal against the outside diameter of the piston 40 as well as form a seal between the bores 30 and 32. One source of the type of seal illustrated is Fluorocarbon Company, Los Alamitos, California.

The body 25 is adapted to receive a valve seat member, generally designated by the numeral 44, which is provided with external threads cooperable with the threaded portion 28. The seat member 44 also includes a reduced diameter portion 46 extending into the bore 30 and being provided with a circumferential groove for receiving groove a suitable seal such as an o-ring or the like 50. The seal provided by the o-ring 50 is advantageously disposed between the flow chamber 34 and the cooperating threads on the seat member and the body 46 whereby high pressure fluid cannot be forced between the cooperating threads. The seat member 44 also includes a head portion 52 which may be provided with suitable opposed flats or other means for receiving a wrench, not shown, for removing the seat from the body 26.

The body 26 includes an inlet conduit or passage portion 54 which is adapted to include a suitable threaded portion 55 for receiving a conduit fitting, not shown, for connecting the valve 22 to the pump discharge conduit 16 or other source of high pressure fluid. The seat member 44 also includes a discharge flow passage 56 including a threaded portion formed in the head 52 to which a suitable fitting such as a relatively short pipe nipple 60 may be connected. A right angle fitting 62 is also suitably connected to the conduit portion 60 to redirect the discharge flow stream from the valve 22 through a discharge line such as the conduit 24.

In the development of a high pressure regulator valve for applications such as dumping or discharging substantially all of the output of a source of high pressure liquid the design criteria for the valve includes the sizing of the discharge passage 56 to be adequate such that a negligible pressure drop occurs through the passage when the valve is in the maximum open position. For example, for a valve adapted to operate between 703 to 1515 kg/cm$^2$ (10,000 and 20,000 psig) inlet pressure in the passage 54 a 7 to 15 kg/cm$^2$ (100 to 200 psig) pressure drop through the passage 56 is considered negligible. Accordingly, once the flow area of the passage 56 has been determined it is then desirable to maximize the surface area of the valve seat which is designated by the numeral 64 in Figures 2 and 3. The surface of the valve seat 64 is formed as a frusto-conical surface delimited by the seat end wall 45 and the passage 56 and adapted to accommodate and be in sealing engagement with a cooperable seating surface 39 formed on the head 38 of the closure member 36.

It has been determined that it is desirable to maximize the actual surface area of the valve seat surface 64 while at the same time providing a circular axial pojected or cross-sectional area $A_2$, measured at the point of intersection of the seating surface with the wall 45 which is not substantially greater than an axial projected area $A_1$, measured at the point of intersection of the surface 64 with the passage 56. At the same time it is important that the cone or included angle B of the conical surfaces 64 and 39 be such that the closure member 36 will not be self-locking in the closed position under the urging of an actuating or biasing force acting on the closure member.

In the selection of a valve for regulating pressures in the range of 703 to 3515 kg/cm$^2$ (10,000 to 20,000 psi) and capable of discharging flow rates up to 189.25 litres per minute (fifty gallons per minute), for example, it is also desirable to maximize the axial projected cross-sectional area $A_3$, of the control piston 40 so that the pressure required to open the valve is not substantially greater than the steady state operating or regulated pressure. Since the force required to open the valve is the pressure in the chamber 34 multiplied by the difference between the areas $A_3$ and $A_2$ and the force required to maintain the valve open is assumed to be the pressure in chamber 34 multiplied by the difference between the areas $A_3$ and $A_1$ minimisation of the variation in the pressures between the valve open and closed positions may be obtained also by increasing the diameter of the control piston 40. However, there are practical limitations to the actual diameter of this component considering material costs and overall size of the valve. Therefore, the difference between $A_3$ and $A_1$ is selected to be no more than substantially ten percent greater than the diference between $A_3$ and $A_2$. For a valve such as the valve 22 adapted for use with high pressure water jet cutting and blast cleaning equipment it has been determined that the ratio of the areas $A_3$ minus $A_2$ and $A_3$ minus $A_1$ can be chosen to provide a variation in opening pressure and operating pressure of five to ten percent, which variation is acceptable. Moreover, it has also been determined that, in using hardened stainless steel components for the valve closure member 36 and the seat 44, and included angle B of the conical surfaces 39 and 64 of between substantially 30° and 45°, and preferably 30° and 44°, will allow the closure member to move freely off of the seat surface under the urging of pressure fluid at a design opening pressure of between 703 to 3515 kg/cm$^2$ (10,000 psig and 20,000 psig). This is a particulary important consideration in view of the fact that the force biasing the closure member in the closed position for a valve such as the valve 22 must be substantial when considering the operating pressures and the size of the valve required for typical flow volumes used in water jet cutting and cleaning operations.

The valve 22 is provided with an improved mechanism for biasing the closure member 36 toward the closed position and for controlling the fluid pressure regulated by the valve. The biasing mechanism for the valve 22 includes a cylindrical piston which is disposed in a housing comprising a cylinder member 70 characterized by a cylindrical steel tube having a bore 72. The cylinder 70 is located on the valve body 26 by a shoulder 74 machined into the end face 75 of the valve body and is retained in engagement with the valve body by a head member 76 and a plurality of elongated threaded tie rods 78. The tie rods 78 preferably comprise stud members which are threadedly engaged with a cylindrical collar 80 which is sleeved over the outer cylindrical surface 27 of the body 26 and butted against a transverse shoulder 82 opposite the shoulder 74. The head member 76 comprises a relatively heavy steel plate including one or more threaded passages such as the passages 84 and 86 formed therein. The head member 76 is retained in assembly with the cylinder 70 and body 26 by nuts 77 threadedly engaged with the tie rods 78.

The biasing mechanism for the valve 22 includes a cylindrical piston 88 disposed in the bore 72 and free to float or reciprocate in the bore and to engage a transverse end face 33 of the control piston 40. The piston 88 is also engaged with an elastomeric cup shaped diaphragm, generally designated by the numeral 90 disposed in the cylinder bore 72. The diaphragm 90 includes an annular rim portion 92 which is adapted to fit in a cylindrical recess 94 formed in the end face of the cylinder tube 70 and to be engaged by the head member 76 to form a fluid tight seal between the diaphragm, the head member and the cylinder tube 70. The diaphragm 90 includes a transverse end wall 95 opposite the flange 92 and engageable with a surface 89 on the piston 88. The diaphragm 90 is dimensioned to be in slidable but snug fitting relationship within the bore 72 and is provided to form a fluid tight seal for a pressure fluid chamber defined by the diaphragm and the head member 76, and generally designated by the numeral 96. A stop member 98 is disposed in the chamber 96 and is threadedly secured to the head member 76 as shown. The stop member 98 includes a cylindrical head portion 99 which is dimensioned to be positioned a short distance from the diaphragm end wall 95 in accordance with the operating characteristics of the valve 22. A chamber portion 100 between the piston 88 and the end face 75 of the body 26 is vented to atmosphere through a passage 102.

The control pressure at which the closure member 36 opens and regulates the pressure in the line 16 is determined by the pressure of fluid introduced into the chamber 96 and by the axial projected or cross-sectional surface area $A_4$ of the piston 88, Figure 2, neglecting the sidewall thickness of the diaphragm 90. A preferred ratio of the areas $A_4$ to $A_3$ is approximately 10:1 and, accordingly, for a valve adapted to regulate the pressure in conduit 16 at 703 kg/cm² (10,000 psi) the chamber 96 is required to be charged with pressure fluid at a pressure of 70.30 kg/cm² (1,000 psi). The chamber 96 may receive an initial charge of pressure fluid such as an inert gas at the desired pressure through the passage 84 which may be in communication with a conduit 104 having a constant pressure regulator valve 106 disposed therein and in communication with a source of pressure gas such as a tank 108. A suitable gas for use in the biasing mechanism of the valve 22 would be compressed air or nitrogen, for example. Although the chamber 96 may be initially charged with pressure gas at the desired pressure and cut off from the source such as the tank 108 it might be preferred in some applications to maintain a source of additional pressure gas onboard or in proximity to the valve 22 and controlled by a regulator such as the regulator 106. the passage 86 is provided for connecting the chamber 96 to a pressure gauge or indicator, not shown and would, of course, otherwise be plugged prior to charging the chamber 96.

Although the valve 22 is adapted to minimize the difference between the pressure required to open the valve and the pressure which is continuously regulated by the valve in a steady state condition, there is a net difference in these pressures as discussed previously herein. However, the actuator mechanism for the valve 22 is also adapted to minimize such pressure differences by providing the chamber 96 to be maintained at a minimum charge pressure by a regulator such as the regulator 106. However, the regulator 106 can be of a type which will allow the pressure to increase above the set point in the chamber 96 and, of course, this may occur upon movement of the piston 88 to decrease the volume of the chamber. Upon movement of the closure member 36 from the closed position to the open position there is a net reduction in the volume of the chamber 96 as the piston 88 displaces or compresses the diaphragm 90. The volume of the chamber 96 can be determined to be such that at maximum displacement of the piston 88, as determined by the stop member 98, the change in volume of the chamber 96 will result in an increase in gas pressure in the chamber 96 providing a force acting on the piston 88 which will be balanced by the force acting on the closure member 36 due to the regulated pressure in chamber 34 multiplied by the difference between the area $A_3$ and $A_1$. Accordingly, the tendency for the valve 22 to operate at a regulated pressure in the conduit 16 less than the pressure required to open the valve is offset by an increase in the effective closing force of the actuator tending to move the closure member 36 toward the valve closed position. This action further minimizes the difference between the pressure required to open the valve and the pressure controlled by the valve on a steady state basis.

The operation of the valve 22 is believed to be evident from the foregoing description. As illustrated in Figure 1 the valve is connected in parallel with the working fluid flow line or conduit 16 leading from the pump 10 to one or more water blast guns such as the gun 14. In use the valve 22 may be provided with a source of pressure gas such as the pressure tank 108 or an initial charge of pressure fluid may be introduced into the chamber 96 and then shutoff from the source. Thanks to the structural features of the valve 22 which provide for minimum variation between the valve opening pressure and the constant regulated pressure one or several jet guns 14 may be operated from the same pump discharge line 16 and the working pressure of the guns may be adjusted by setting the pressure in the chamber 96.

Although the construction of the valve 22 is such as to minimize the need for replacement or repair, the uncomplicated structural features of the valve facilitate ease of repair and/or replacement of the valve seat member 44 and the closure member 36, for example. The closure member 36 may, in fact, be replaced without disassembly of the actuator portion of the valve by simply removing the seat member 44 and allowing the closure member and the integral control piston 40 to be dropped or easily pulled out of the chamber 34. The diaphragm 90 is a longlife element and does not undergo severe cyclical distentions. In fact, for a valve sized to regulate a maximum of 189.25 litres per minute (fifty gallons per minute) of pump discharge flow, the diameter of the piston 88 may be a nominal 14.35 cms (5.65 inches), the diameter of the control piston 40 may be a nominal 4.44 cms (1.75 inches) and the diameter of the discharge conduit 56 a nominal 1.14 cms (.45 inches). For a valve sized in accordance with the above described dimensions and a minimum pressure drop across the seat discharge passage of approximately 8.43 kg/cm$^2$ to 10.5 kg/cm$^2$ (120 to 150 psig), the piston 88 will normally undergo movement of a maximum of 0.05 cms (.020 inches). Accordingly, this limited movement will not result in severe distention or compressing of the diaphragm 90.

Those skilled in the art will appreciate from the foregoing description that the valve 22 is mechanically uncomplicated and yet is provided with improved operating characteristics which are particularly desirable for applications in regulating pressures in relatively high pressure hydraulic applications.

### Claims

1. A valve adapted for regulating relatively high hydraulic fluid pressures in a conduit (16), the pressures being in the range of at least 703.00 to 3515.00 kg/cm$^2$ (10,000 to 20,000 psig), including a body (26) defining a flow chamber (34), an inlet passage (54) in communication with the chamber (34) and adapted to be connected to the conduit (16), means forming a seat member (44) including an outlet passage (56) opening into the chamber (34) and having a portion forming a seat (64), a tapered valve closure member (36) disposed in the chamber (34), the valve closure member (36) comprising a portion (38) engageable with the seat member (44), a control piston (40) connected to the closure member portion (38) and including a portion slidably disposed in a bore (32) in the body (26), and biasing means (72, 88, 90) for urging the control piston (33) toward the closed position of the closure member (36), characterised in that the seat member (44) provides a tapered valve seat (64), and the valve closure member (36) has a first effective cross-sectional area $(A_3-A_2)$, which is exposed to fluid pressure in the chamber (34) and is responsive to the fluid pressure to urge the closure member (36) to move away from the surface of the seat (64), the seat (64) being configured such that a second effective cross-section area $(A_3-A_1)$ of the closure member (36) is exposed to fluid pressure in the chamber (34) upon movement of the closure member (36) to the valve open position which second area is no more than approximately ten percent greater than the first area $(A_3-A_2)$.

2. A valve according to claim 1, characterised in that the surface of the seat (64) includes a frusto-conical bore portion in the seat member (44), and the closure member (36) includes a conical portion (38) engageable with the surface of the seat (64), the included angle (B) of the conical portion being in the range of approximately 30° to 45° to prevent the closure member (36) from locking engagement with the seat member (44).

3. A valve according to claim 1 or 2, characterised in that the ratio of the first and second areas $(A_3-A_2, A_3-A_1)$ is such as to provide a variation between opening pressure and operating pressure of five to ten percent.

4. A valve according to any preceding claim, characterised in that the biasing means comprises a pressure fluid cylinder (72, 76) an actuating piston (88) disposed in the cylinder, and a flexible cup shaped diaphragm (90) disposed in the cylinder and engaged with the actuating piston (88) and defining a pressure fluid chamber (96) for storing fluid under pressure to act on the actuating piston for urging the control piston (40) to move the closure member (36) to the valve closed position.

5. A valve according to claim 4, characterised in that the actuating piston (88) is disposed between the diaphragm (90) and the control piston (40).

6. A valve according to claim 4 or 5, characterised in that the biasing means (72, 88, 90) includes a stop member (98) for limiting the movement of the actuating piston (88) in a direction to permit valve opening movement of the closure member (36) whereby the volume of the pressure fluid chamber (96) is reduced a maximum amount to provide a pressure increase in the pressure fluid chamber (96) sufficient to provide a valve closing force acting on the control piston (40) which is substantially balanced by a valve opening force acting on the control piston (40).

7. A valve according to any one of claims 4 to 6, characterised in that the actuating cylinder (72, 76) includes a removable head member (76) and a cylinder member (72), joined in sealing engagement by a flange (92) formed on the cup shaped diaphragm (90), and in that the head member (76) is joined in assembly with the cylinder member (72) by a plurality of elongated tie rods (78) engaged at one end with the head member (76) and at their other end with a cylindrical ring (80) engaged with a retaining shoulder (82) formed on the body (26).

8. A valve according to any preceding claim, characterised in that the seat member (44) is threadedly engaged with a cooperating threaded portion (28) of a bore (30) in the body defining the flow chamber (34), and in that the closure member (36) is retained in the body by the seat member (44).

9. A valve as claimed in claim 8, characterised in that an annular seal member (42) is disposed in the bore (30) defining the flow chamber (34) and in sealing engagement with the control piston (40) and with the bore wall of the flow chamber (34) to isolate the flow chamber (34) from the biasing means (72, 78, 80).

**Patentansprüche**

1. Ventil zur Regulierung relativ hoher hydraulischer Strömungsmitteldrücke in einer Leitung (16), wobei die Drücke im Bereich von mindestens 703,00 bis 3515,00 kg/cm² (10000 bis 20000 psig) liegen und das Ventil folgendes aufweist:

einen Körper (26), der eine Strömungskammer (34) definiert, einen Einlaßdurchlaß (54) in Verbindung mit der Kammer (34) und geeignet zur Verbindung mit der Leitung (16), Mittel, die ein Sitzglied (44) bilden einschließlich einem sich in die Kammer (34) öffnenden Auslaßdurchlasses (56) und mit einem einem Sitz (64) bildenden Teil,

ein verjüngtes Ventilschließglied (36) angeordnet in der Kammer (34),

wobei das Ventilschließglied (36) einen mit dem Sitzglied (44) in Eingriff bringbaren Teil (38) aufweist, ferner einen Steuerkolben (40) verbunden mit dem Schließgliedteil (38) und einschließlich eines gleitend in einer Bohrung (32) des Körpers (26) angeordneten Teils, und

Vorspannmittel (72, 88, 90) um den Steuerkolben (33) zur Schließposition des Verschlußglieds (36) hin zu drücken, dadurch gekennzeichnet, daß

das Sitzglied (44) einen verjüngten Ventilsitz (64) vorsieht, und daß das Ventilschließglied (36) eine erste effektive Querschnittsfläche $(A_3—A_2)$ aufweist, die dem Strömungsmitteldruck in der Kammer (34) ausgesetzt ist und auf den Strömungsmitteldruck anspricht um das Schließglied (36) zu Wegbewegung von der Oberfläche des Sitzes (64) zu zwingen, wobei der Sitz (64) derart geformt ist, daß eine zweite effektive Querschnittsfläche $(A_3—A_1)$ des Schließglieds (36) dem Strömungsmitteldruck in der Kammer (34) ausgesetzt ist bei Bewegung des Schließglieds (36) zur Ventilöffnungsposition, wobei die zweite Fläche nicht mehr als annähernd 10% größer ist als die erste Fläche $(A_3—A_2)$.

2. Ventil nach Anspruch 1, dadurch gekennzeichnet, daß die Oberfläche des Sitzes (64) einen kegelstumpfförmigen Bohrungsteil im Sitzglied (44) aufweist und daß das Schließglied (36) einen konischen Teil (38) in Eingriff bringbar mit der Oberfläche des Sitzes (64) umfaßt, wobei der eingeschlossene Winkel (B) des konischen Teils im Bereich von annähernd 30° bis 45° liegt, um den Verriegelungseingriff des Schließglieds (36) mit dem Sitzglied (44) zu verhindern.

3. Ventil nach Anspruch 1 oder 2, dadurch gekennzeichnet, daß das Verhältnis aus den ersten und zweiten Flächen $(A_3—A_2, A_3—A_1)$ so vorgesehen ist, daß eine Variation zwischen dem Öffnungsdruck und dem Betriebsdruck von 5 bis 10% vorgesehen ist.

4. Ventil nach einem Vorhergehenden Anspruch, dadurch gekennzeichnet, daß die Vorspannmittel eine Druckströmungsmittelzylinder (72, 76), einen Betäigungskolben (88) angeordnet im Zylinder und eine flexible napfförmige Membran (90) aufweisen, und zwar angeordnet im Zylinder und in Eingriff stehend mit dem Betätigungskolben (88) und eine Druckströmungsmittelkammer (96) definierend für die Speicherung von unter Druck stehendem Strömungsmittel um auf den Betätigungskolben einzuwirken, um den Steuerkolben (40) zur Bewegung des Schließglieds (36) in die Ventilschließposition zu drängen.

5. Ventil nach Anspruch 4, dadurch gekennzeichnet, daß der Betätigungskolben (88) zwischen der Membran (90) und dem Steuekolben (40) angeordnet ist.

6. Ventil nach Anspruch 4 oder 5, dadurch gekennzeichnet, daß die Vorspannmittel (72, 88, 90) ein Stoppglied (98) aufweisen, um die Bewegung des Betätigungskolbens (88) in einer Richtung zu begrenzen, um die Ventilöffnungsbewegung des Schließglieds (36) zu gestatten, wodurch das Volumen der Druckströmungsmittelkammer (96) um eine Maximalgröße reduziert wird, um einen Druckanstieg ein der Druckströmungsmittelkammer (96) vorzusehen, der ausreicht, um eine Ventilschließkraft zu erzeugen, die auf den Steuerkolben (40) wirkt, die im wesentlichen durch eine Ventilöffnungskraft ausgeglichen ist, welche auf den Steuerkolben (40) wirkt.

7. Ventil nach einem der Ansprüche 4 bis 6, dadurch gekennzeichnet, daß der Betätigungszylinder (72, 76) ein entfernbares Kopfglied (76) und ein Zylinderglied (72) aufweist, und zwar in Abdichteingriff miteinander durch einen Flansch (92) verbunden, der an der napfförmigen Membran (90) ausgebildet ist, und ferner dadurch gekennzeichnet, daß das Kopfglied (76) im Zusammenbau mit dem Zylinderglied (72) durch eine Vielzahl von langgestreckten Verbindungsstangen (78) vereinigt ist, die an einem Ende mit dem Kopfglied (76) in Eingriff stehen und die an ihrem anderen Ende mit einem zylindrischen Ring (80) in Eingriff stehen, wobei eine Halteschulter (82) am Körper (26) ausgebildet ist.

8. Ventil nach einem vorhergehenden Anspruch, dadurch gekennzeichnet, daß das Sitzglied (44) gewindemäßig mit einem zusammenarbeitenden mit Gewinde versehenen Teil (28) eine Bohrung (30) in einem die Strömungskammer (34) bildenden Körper in Eingriff steht, und daß das Verschlußglied (36) im Körper durch das Sitzglied (44) gehalten ist.

9. Ventil nach Anspruch 8, dadurch gekennzeichnet, daß das ringförmige Sitzglied (42) in der die Strömungskammer (34) definierenden Bohrung (30) angeordnet ist und in Dichteingriff mit dem Steuerkolben (40) und der Bohrungswand der Strömungskammer (34) steht, um die Strömungskammer (34) von den Vorspannmitteln (72, 78, 80) zu isolieren.

**Revendications**

1. Vanne adaptée pour réguler des pressions relativement hautes de fluide hydraulique dans une conduite (16), les pressions allant d'au moins 703,00 à 3515,00 kg/cm² (10 000 à 20 000 psig), comprenant un corps (26) définissant une chambre de passage (34), un passage d'entrée (54) communiquant avec la chambre (34) et adapté pour être relié à la conduite (16), des moyens formant un bloc siège (44) comprenant un passage de sortie (56) ouvert vers la chambre (34) et ayant une partie formant un siège (64), un clapet conique (36) dans la chambre (34), le clapet (36) comprenant une partie (38) qui vient en contact avec le bloc siège (44), un piston de commande (40) relié à une partie du clapet (38) et comprenant une partie pouvant coulisser dans un trou (32) du corps (26), et des moyens de rappel (72, 88, 90) poussant le piston de commande (33) vers la position fermée du clapet (36), caractérisée en ce que le bloc siège (44) présente un siège conique (64), et en ce que le clapet (36) a une première aire de section efficace ($A_3$—$A_2$) qui est exposée à la pression du fluide dans la chambre (34) et est soumise à la pression du fluide pour pousser le clapet (36) en l'éloignant de la surface du siège (64), le siègt (64) ayant une forme telle qu'une seconde aire de section efficace ($A_3$—$A_1$) du cla-pet (36) est exposée à la pression du fluide dans la chambre (36) au moment du passage du clapet (36) en position ouverte, cette second aire n'étant pas supérieure de plus de 10 pourcents environ à la première aire ($A_3$—$A_2$).

2. Vanne suivant la revendication 1, caractérisée en ce que la surface du siège (64) comprend un trou tronconique dans le bloc siège (44) et en ce que le clapet (36) comprend une partie conique (38) pouvant venir en contact avec la surface du siège (64), l'angle aigu (B) de la partie conique étant dans une plage de 30° à 45° environ pour empêcher le clapet (36) de se coincer dans le bloc siège (44).

3. Vanne suivant les revendications 1 ou 2, caractérisée en ce que le rapport entre la première et la seconde aire ($A_3$—$A_2$, $A_3$—$A_1$) tel qu'il produit une variation de cinq à dix pourcents entre la pression d'ouverture et la pression de fonctionnement.

4. Vanne suivant l'une des revendications précédentes, caractérisée en ce que les moyens de rappel comprennent un vérin de pression (72, 76), un piston moteur (88) monté dans le vérin et un diaphragme formé d'une coupelle flexible (90) monté dans le vérin en contact avec le piston (88) et formant une chambre de fluide sous pression (96) prévue pour contenir du fluide sous pression agissant sur le piston moteur pour pousser le piston de commande (40) afin de déplacer le clapet (36) vers la position de fermeture de la vanne.

5. Vanne suivant la revendication 4, caractérisée en ce que le piston moteur (88) est placé entre le diaphragme (90) et le piston de commande (40).

6. Vanne suivant la revendications 4 ou 5, caractérisée en ce que les moyens de rappel (72, 88, 90) comprennent une butée (98) pour limiter le mouvement du piston moteur (88) dans le sens d'ouverture de la vanne par mouvement du clapet (36), le volume de la chambre de fluide sous pression (96) étant réduit d'une quantité maximale pour fournir une augmentation de pression dans la chambre de fluide sous pression (96) suffisante pour fournir une force de fermeture de vanne agissant sur le piston de commande (40) qui est pratiquement équilibré par une force d'ouverture de vanne agissant sur le piston de commande (40).

7. Vanne suivant l'une des revendications pre-cedentes 4 à 6, caractérisée en ce que le vérin (72, 76) comprend un chapeau amovible (76) et un vérin (72) en contact étanche par une collerette (92) formée sur le diaphragme (90), et en ce que le chapeau (76) est assemblé avec le vérin (72) par une pluralité de goujons longs passant, à un bout, dans le chapeau (76) et, à l'autre bout, dans un anneau cylindrique (80) qui est en contact avec un épaulement de retenue (82) formé sur le corps (26).

8. Vanne suivant l'une des revendications précédentes, caractérisée en ce que le bloc siège (44) est vissé dans une partie taraudée associée (28) d'une trou (30) dans le corps définissant la chambre de régulation (34) et en ce que le clapet (36) est retenu dans le corps par le bloc siège (44).

9. Vanne suivant la revendication 8, caractérisée en ce qu'un joint torique (42) est monté dans le trou (30) définissant la chambre sous pression (34) et faisant étanchéité entre le piston de commande (40) et la paroi de la chambre de pression (34) pour isoler la chambre sous pression des moyens de rappel (72, 78, 80).

FIG. 1

FIG. 3

1

FIG. 2

2